**Europäisches Patentamt**

**European Patent Office**

**Office européen des brevets**

(19)

(11) Publication number: **0 043 857**
**B1**

## (12) EUROPEAN PATENT SPECIFICATION

(45) Date of publication of patent specification: **25.07.84**

(21) Application number: **80902302.1**

(22) Date of filing: **28.11.80**

(86) International application number:
**PCT/JP80/00291**

(87) International publication number:
**WO 81/01601 11.06.81 Gazette 81/14**

(51) Int. Cl.³: **F 16 M 11/34,**
**G 03 B 17/56**

(54) **TRIPOD.**

(30) Priority: **28.11.79 JP 164398/79**

(43) Date of publication of application:
**20.01.82 Bulletin 82/3**

(45) Publication of the grant of the patent:
**25.07.84 Bulletin 84/30**

(84) Designated Contracting States:
**DE FR GB**

(56) References cited:
**DE - A - 2 216 438**
**DE - B - 1 102 419**
**DE - B - 1 169 146**
**FR - A - 1 109 188**
**FR - A - 2 439 933**
**FR - B - 2 366 509**
**JP - A - 55 057 794**
**JP - U - 55 132 497**
**JP - Y - 34 012 769**
**JP - Y - 49 042 737**
**JP - Y - 50 034 026**
**SU - A - 630 484**

(73) Proprietor: **INA, Tatsuo**
**22-11, Sendagi 1-chome**
**Bunkyo-ku, Tokyo 112 (JP)**

(72) Inventor: **INA, Tatsuo**
**22-11, Sendagi 1-chome**
**Bunkyo-ku, Tokyo 112 (JP)**

(74) Representative: **Patentanwälte Beetz sen. - Beetz**
**jun. Timpe - Siegfried - Schmitt-Fumian**
**Steinsdorfstrasse 10**
**D-8000 München 22 (DE)**

(56) References cited:
**US - A - 1 598 943**
**US - A - 2 519 549**
**US - A - 2 526 046**

Courier Press, Leamington Spa, England.

## Description

Technical field

This invention relates to a tripod for cameras, which is suitably used for photographing cameras and television cameras.

Background art

Such an embodiment of a tripod is shown by DE—B—11 69 146. For the adjustment of a leg-opening angle which is the same for all tripod legs an adjustable abutment ring is provided which is engaged by the tripod legs with counter-abutment faces provided thereon. This abutment ring has abutment surfaces distributed about its circumference at different levels so that upon engagement of the counter-abutments of the tripod legs with the abutment surfaces of the ring certain leg-opening positions of the tripod legs are fixed, whereas the ring itself may be fixed in different rotary positions. For adjusting the abutment ring about its axis gripping notches are provided on the outer surface of the ring. The counter-abutments engage the abutment surfaces only with a relatively small area so that in operation great wear has to be expected.

FR—A—11 09 188 shows a tripod in which a telescope-like auxiliary leg is disposed between two main legs. The main legs are provided with an upper and a lower connector.

An object of this invention is to provide a simply constructed tripod for cameras which may easily be manufactured and easily be handled and which is subject to little wear and accordingly has a long life.

In order to achieve the above object, this invention provides a tripod for cameras, comprising

—a tripod head, three legs oscillatably supported on said head and having projections at those end portions thereof which are above an oscillatably supported portion thereof,

—regulating means for cooperating with said projections at said end portions of said legs to limit the leg-opening angle for all three legs uniformly for the different angular widths, the projections integrated with said legs having an oscillation axis extending transversely to the longitudinal axis of said legs, which is characterized in that for each leg a regulator is provided which has projections and recesses which can be engaged alternately with the projections of the legs when the regulator is moved in parallel to said oscillation axis of said legs the regulator being fixed on a shaft in parallel to said oscillation axis said shaft being supported in side walls of said head for longitudinal movement, a spring urging said regulator against one of said side walls and said shaft having a projecting press-button-like end portion so as to permit manual shifting of said regulator.

In order to use in the usual condition the tripod of the above-described construction according to the present invention, the leg units thereof can be set at the most-frequently-used angle without carrying out any special operations therefor. Accordingly, the tripod can be used in a stable condition. Also, the tripod permits the leg units thereof to be opened at a larger angle to allow an object to be photographed at a low angle by a camera set thereon.

Brief description of drawings

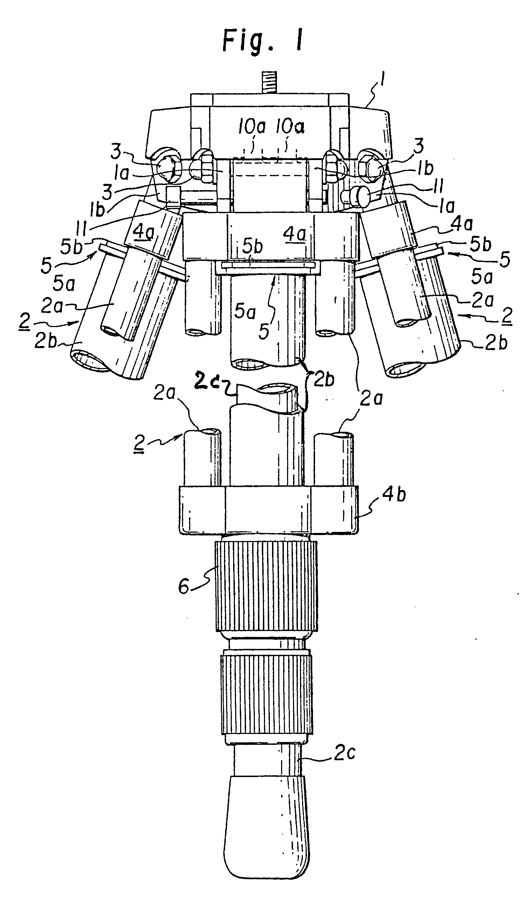

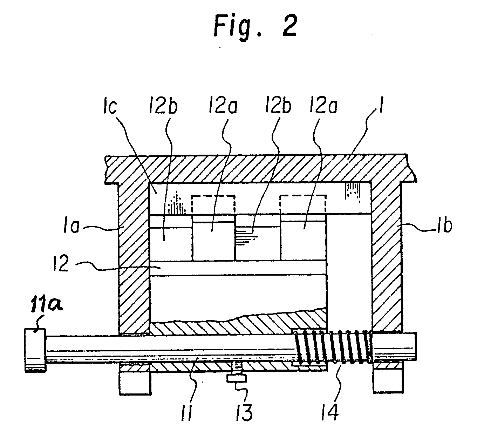

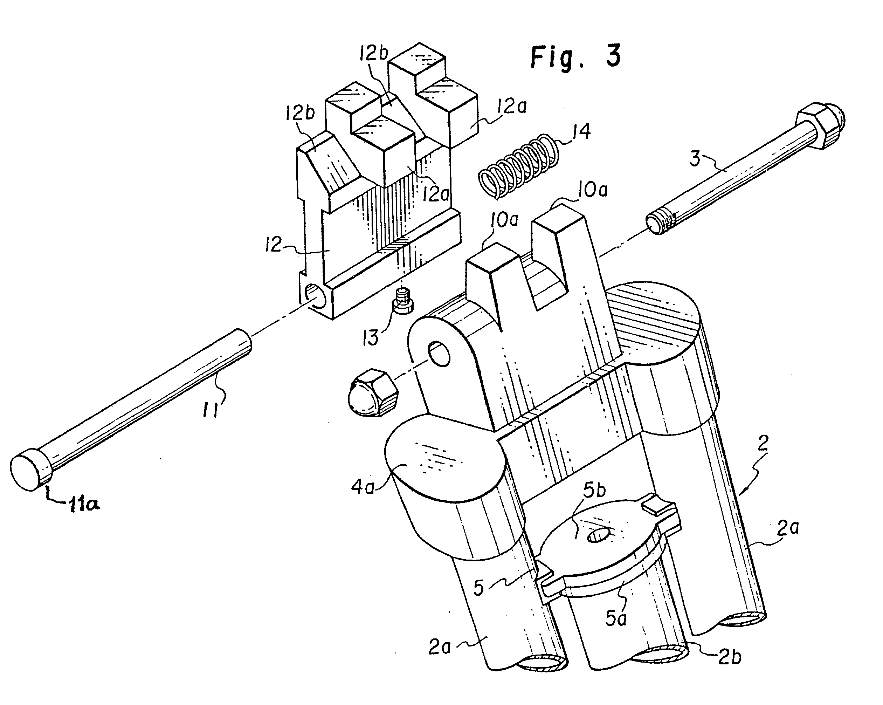

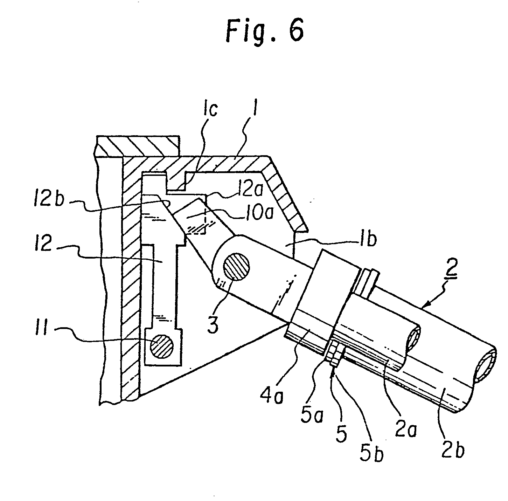

The accompanying drawings show a mode of embodiment of this invention, wherein: Fig. 1 is a partially cutaway front elevational view of a tripod; Fig. 2 is a front elevational view of a part of the tripod; Fig. 3 is an exploded view in perspective of a part of the tripod, Fig. 4 is a side elevational view in section of a part of the tripod; Fig. 5 is a side elevational view in section of a part of the tripod with leg units thereof displaced; Fig. 6 is a side elevational view in section of a part of the tripod with leg units thereof displaced; Fig. 7 is a partially sectional view of a leg unit; and Fig. 8 is an exploded view in perspective of a locking unit.

Best mode for carrying out the invention

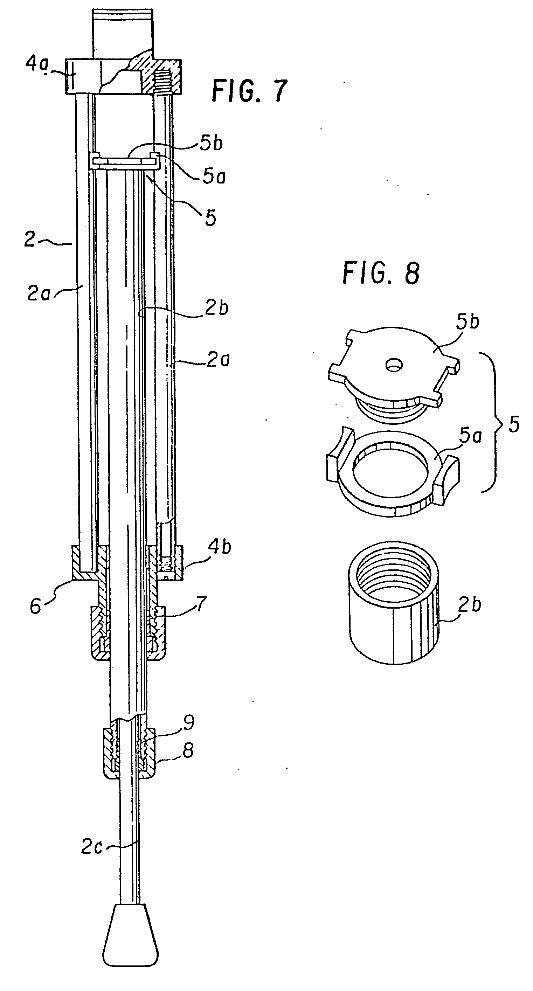

The best mode for carrying out the invention will now be described. Leg units 2 are oscillatably supported via shafts 3 between support walls 1a, 1b, which are provided at a lower portion of a tripod head 1 in such a manner as to be extended in three directions. Each of the leg units 2 consists of main legs 2a, a first auxiliary leg 2b, and a second auxiliary leg 2c. The main legs 2a consist of two thinner pipes, which are joined at their respective both end portions to an upper connector 4a and a lower connector 4b, the upper connector 4a being supported via a shaft 3 on the support walls 1a, 1b. The first auxiliary leg 2b consists of a tubular element, and is slidably held between the two thinner pipes constituting the main legs 2a, via a mounting bore (not shown) provided in the lower connector 4b for the main legs 2a. A locking unit 5 for preventing the lateral oscillations of the first auxiliary leg 2b is provided at that end portion thereof which is held between the main legs 2a. As best seen from Fig. 7, the locking unit 5 is adapted to be fixed to the lower connector 4b via a wedge ring 7 by tightening a nut 6 screwed to a lower portion of the lower connector 4b. As best seen from Fig. 8, the locking unit 5 consists of a buffer member 5a and a holding nut 5b, which are made of, for example, a plastic. The second auxiliary leg 2c also consists of a tubular element, and is slidably held in the interior of the first auxiliary leg 2b. The second auxiliary leg 2c is adapted to be fixed to the first auxiliary leg 2b via a wedge ring 9 by tightening a nut 8.

A plurality of projections 10a, 10a are provided at an upper end portion of the leg unit 2, i.e. at that portion of the leg unit 2 which is above a fulcrum of a shaft-supported end portion of the upper connector 4a for the main leg 2a.

On the other hand, a support shaft 11 is provided between the support walls 1a, 1b. The support shaft 11 is positioned on the inner side of the leg unit 2 and adapted to be moved axially, i.e. in a direction at right angles to the leg unit 2. A regulator 12 is fixedly mounted on the support shaft 11 with a screw 13. The regulator 12 is urged by a coiled compression spring 14, which is resiliently secured to the support wall 1b as it is fitted around the support shaft 11, in such a manner that the regulator 12 is moved to left with the support shaft 11. The regulator 12 is provided in that position thereon which is opposed to the projections 10a, 10a with projections 12a, 12a and recesses 12b, 12b, which can be engaged alternately with the projections 10a, 10a when the regulator 12 is moved. Those portions of the projections 12a, 12a which can be engaged with the projections 10a, 10a are formed at 90°, and those portions of the recesses 12b, 12b which can be engaged with the projections 10a, 10a are inclined at, for example, 45°.

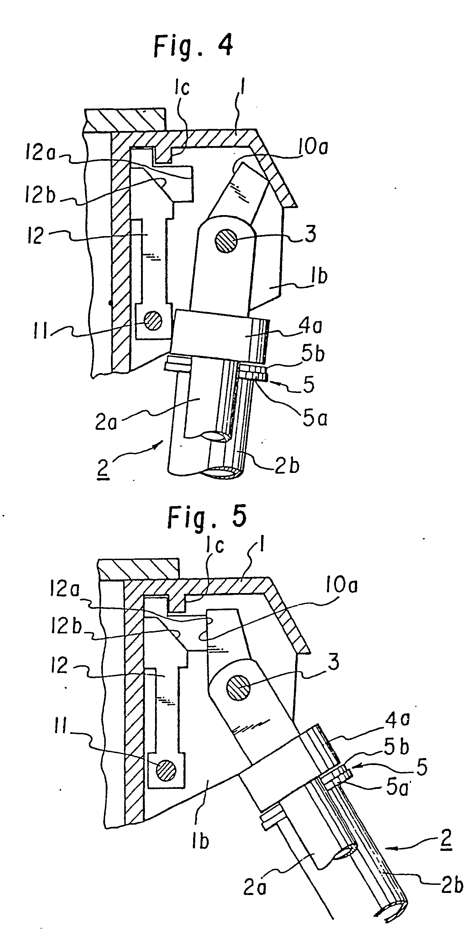

The operation and effect of this invention will now be described. While the leg unit 2 is closed, the projections 10a, 10a are positioned away from the projections 12a, 12a of the regulator 12 as best seen from Fig. 4. When the leg unit 2 is drawn outwardly, it is oscillated about the support shaft 3 serving as a fulcrum, to be stopped the moment the projections 10a, 10a come into contact with the projections 12a, 12a as best seen from Fig. 5, since the regulator 12 is kept in the same position owing to the coiled compression spring 14. The angle at which the leg unit is thus opened is the most-frequently-used angle.

In order to further open the leg unit for taking a picture of an object at a low angle, it is preferable that the leg unit 2 be closed once to thereafter press a head portion of the support shaft 11 in the rightward direction against the resilient force of the coiled compression spring 14. Consequently, the regulator 12 is moved with the support shaft 11 to allow the recesses 12b, 12b to be opposed to the projections 10a, 10a. When the leg unit 2 is then drawn outwardly, it is oscillated until the projections 10a, 10a has come into engagement with the recesses 12b, 12b. Accordingly, the angle of the leg unit 2 thus opened is greater than that in the case previously described, so that a camera can be set in a lower position.

In order to close the leg unit 2, which has been opened in such a larger angle as mentioned above, it has only to be pressed in the closing direction. The leg unit 2 can thus be closed smoothly. When the leg unit 2 has been closed at a predetermined angle, the projections 10a, 10a and the recesses 12b, 12b are disengaged from one another. As a result, the regulator 12 is moved axially and automatically in the leftward direction by the resilient force of the coiled compression spring 14, to be returned to the original position. Therefore, when the leg unit 2 is opened again, it is found in an automatically reset state, in which the leg unit 2 is ready to be opened at the most-frequently-used angle. A projection 1c extending perpendicularly in the downward direction from an inner stationary portion of the tripod head 1 so as to allow a part of the regulator 12 to be engaged therewith serves to prevent the oscillation of the regulator 12 and effect a smooth movement of the regulator 12 returning to the original position when the leg unit 2 is closed. Needless to say, the oscillation of the regulator 12 can also be prevented by employing an angular shaft as the support shaft 11.

The first auxiliary leg 2b and the second auxiliary leg 2c, which are best seen from Fig. 7, can be extended and contracted freely in the vertical direction by loosening the nut 6 or 8. While such a leg-extending or contracting operation is conducted, the first auxiliary leg 2b does not collide noisily with the upper connector 4a owing to the buffer member 5a projected from an upper end portion of the first auxiliary leg 2b. Owing to the locking unit consisting of this buffer member 5a, no grating sounds are generated in the first auxiliary leg 2b. Since the first auxiliary leg 2b is held by the pipes constituting the main legs 2a, it neither shakes nor takes an unstable posture.

The leg unit 2 consisting of apparently three pipes, in which the second auxiliary leg 2c has been fully retracted into the first auxiliary leg 2b, is strong enough to stably support a heavy camera, such as a television camera.

## Claims

1. A tripod for cameras, comprising:

—a tripod head (1), three legs (2) oscillatably supported on said head and having projections (10a) at those end portions thereof which are above an oscillatably supported portion thereof,

—regulating means for cooperating with said projections (10a) at said end portions of said legs (2) to limit the leg-opening angle for all three legs uniformly for the different angular widths, the projections (10a) integrated with said legs having an oscillation axis (3) extending transversely to the longitudinal axis of said legs, characterized in that for each leg (2) a regulator (12) is provided which has projections (12a) and recesses (12b) which can be engaged alternately with the projections (10a) of the legs (2) when the regulator is moved in parallel to said oscillation axis (3) of said legs (2), the regulator (12) being fixed on a shaft (11) extending in parallel to said oscillation axis (3), said shaft (11) being supported in side walls (1a, 1b) of said head (1) for longitudinal movement, a spring (14) urging said regulator (12) against one (1a) of said side walls and said shaft (11) having a projecting press-button-like end portion (11a) so as to permit manual shifting of said regulator (12).

2. A tripod for cameras according to Claim 1, wherein each of said leg units (2) consists of main legs (2a) composed of two pipes joined at their respective both end portions to upper and lower connectors (4a, 4b), a first auxiliary leg (2b) provided between said main legs (2a) so as to be extended through said lower connector (4b), and a second auxiliary leg (2c) retractably fitted into said first auxiliary leg (2b), said projections (10a, 10a) being provided on said upper connectors (4a).

3. A tripod for cameras according to Claim 2, wherein each of said first auxiliary legs (2b) extended between said main legs (2a) is provided at an upper end portion thereof with a locking unit (5) for holding said main legs (2a) onto said first auxiliary leg (2b).

4. A tripod for cameras according to Claim 3, wherein each of said locking units (5) consists of a buffer member (5a) and a holding unit (5b).

**Revendications**

1. Trépied pour appareils de prises de vues comprenant:

—une tête de trépied (1),

—trois pieds (2) supportés de manière orientable sur cette tête et ayant des saillies (10a) aux extrémités, se trouvant au-dessus des parties des supports orientables,

—des moyens de réglage en coopération avec ces saillies (10a) aux extrémités des pieds (2), afin de limiter l'angle d'ouverture des trois pieds de manière uniforme pour différentes ouvertures angulaires, les saillies (10a) intégrées aux pieds ayant un axe d'oscillation (3) s'étendant transversalement à l'axe longitudinal des pieds, caractérisé en ce que pour chaque pied (2) il est prévu un régulateur (12) présentant des saillies (12a) et des enfoncements (12b), qui peuvent être engagés alternativement avec les saillies (10a) des pieds (2), lorsque le régulateur est déplacé parallèlement à l'axe d'oscillation (3) des pieds (2), le régulateur (12) étant fixé sur un arbre (11) s'étendant parallèlement à l'axe d'oscillation (3), l'arbre (11) étant supporté dans les parois latérales (1a, 1b) de la tête (1), pour un mouvement longitudinal un ressort pressant le régulateur (12) contre une (1a) des parois latérales, et l'arbre (11) ayant une extrémité en saillie (11a) semblable à une bouton-poussoir, de manière à permettre le déplacement manuel de régulateur (12).

2. Trépied pour appareils de prises de vues selon la revendication 1, pour lequel chaque pied comprend:

—des pieds principaux (2a) composés de deux tuyaux raccordés respectivement à leurs deux extrémités aux connecteurs supérieur et inférieur (4a, 4b),

—un premier pied auxiliaire (2b) prévu entre les pieds principaux (2a) de manière à être déployé à travers le connecteur inférieur (4b), et

—un second pied auxiliaire (2c) coulissant dans le premier pied auxiliaire (2b),

—les saillies (10a, 10b) étant prévues sur les connecteurs supérieurs (4a).

3. Trépied pour appareils de prises de vues selon la revendication 2, pour lequel chacun des premiers pieds auxiliaires (2b) déployés entre les bras principaux (2a) est muni d'un verrou (5) à son extrémité supérieure pour maintenir les pieds principaux (2a) sur le premier pied auxiliaire (2b).

4. Trépied pour appareils de prises de vues selon la revendication 3, pour lequel chacun des verrous (5) comprend une membrure-tampon (5a) et un bloc de maintien (5b).

**Patentansprüche**

1. Dreibeiniges Kamerastativ mit

—einem Stativkopf (1),

—drei schwenkbar an dem Stativkopf gehalterten Beinen (2), deren über den schwenkbaren Halterungen liegende Enden Vorkargungen (10a) aufweisen,

—mit den Vorkargungen (10a) an den Enden der Beine (2) zusammenwirkenden Stellvorrichtungen zur gleichförmigen Begrenzung des Öffenungswinkels der drei Beine für verschiedene Öffnungsweiten, wobei die an den Beinen angebrachten Vorkargungen (10a) senkrecht zu den Längsachsen der Beine verlaufende Schwenkachsen (3) aufweisen; dadurch gekennzeichnet, daß für jedes Bein (2) eine Stellvorrichtung (12) vorgesehen ist, mit Vorkargungen (12a) und Vertiefungen (12b), die wechselweise in die Vorkargungen (10a) der Beine (2) eingreifen können, während die Stellvorrichtung (12) parallel zu der Schwenkachse (3) der Beine (2) verschoben wird, wobei die Stellvorrichtung (12) auf einer parallel zur Schwenkachse (3) verlaufenden, in Seitenwänden (1a, 1b) des Kopfes (1) gehalterten Welle (11) befestigt ist, und für die Längsbewegungen eine Feder (14) die Stellvorrichtung (12) gegen eine der Seitenwände (1a) drückt, und die Welle (11) einen Druckknopf-ähnlichen vorstehenden Endbereich (11a) aufweist, um damit das manuelle Verschieben der Stellvorrichtung (12) zu ermöglichen.

2. Dreibeiniges Kamerastativ nach Anspruch 1, bei dem jede Beineinheit (2) aus

—zwei an ihren jeweiligen Enden an oberen bzw. unteren Verbindungsstücken (4a, 4b) zusammengeführten Rohren bestehenden Hauptbeinen (2a),

—einem ersten Hilfsbein (2b), das so zwischen den beiden Hauptbeinen (2a) angebracht ist, daß es durch das untere Verbindungsstück (4b) verläuft, und

—einem zweiten Hilfsbein (2c), das einschiebbar in das erste Hilfsbein (2b) eingepasst ist, besteht und

—die Vorkargungen (10a, 10b) an dem oberen Verbindungsstück (4a) angebracht sind.

3. Dreibeiniges Kamerastativ nach Anspruch 2, bei dem jeder der ersten zwischen den Hauptbeinen (2a) verlaufenden Hilfsbeine (2b) an deren oberen Enden mit eienr Feststelleinheit (5) zum Haltern der Hauptbeine (2a) an dem ersten Hilfsbein versehen ist.

4. Dreibeiniges Kamerastativ nach Anspruch 3, bei dem jede Feststelleinheit (5) ein Abstützglied (5a) und eine Halterungseinheit (5b) aufweist.

# Fig. I

# Fig. 2

Fig. 3

## Fig. 4

## Fig. 5

4

# Fig. 6

FIG. 7

FIG. 8